**Europäisches Patentamt**

**European Patent Office**

**Office européen des brevets**

(19)

(11) **EP 1 302 285 A2**

(12) **EUROPÄISCHE PATENTANMELDUNG**

(43) Veröffentlichungstag:
16.04.2003 Patentblatt 2003/16

(51) Int Cl.⁷: **B25J 9/16**

(21) Anmeldenummer: 02019185.4

(22) Anmeldetag: 02.09.2002

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **06.09.2001 DE 10143753**

(71) Anmelder: **Deutsches Zentrum für Luft- und
Raumfahrt e.V.
51170 Köln (DE)**

(72) Erfinder:
• **Schreiber, Günter
82210 Germering (DE)**
• **Albu-Schaefer, Alin
81241 München (DE)**
• **Sporer, Norbert
82407 Wielenbach (DE)**

(74) Vertreter: **Beyer, Andreas, Dr.
Wuesthoff & Wuesthoff,
Patent- und Rechtsanwälte,
Schweigerstrasse 2
81541 München (DE)**

(54) **Kalibrierverfahren für einen Roboterarm**

(57)    Die vorliegende Erfindung stellt ein Verfahren zum Kalibrieren eines Roboterarmes bereit, bei dem Parameter definiert werden, die die Lage und Orientierung von Gelenken eines Roboterarmes charakterisieren. Der Tool-Center-Point des Roboterarmes wird an einer Referenzposition festgelegt, und danach wird eine Nullraumbewegung bezüglich dieser Referenzposition durchgeführt. Dabei werden Gelenkwinkel der Gelenke des Roboterarmes ermittelt und zur Schätzung aktueller Parameterwerte verwendet.

Fig. 2

**EP 1 302 285 A2**

**Beschreibung**

Die vorliegende Erfindung betrifft ein Verfahren zum Kalibrieren eines Roboterarmes, bei dem durch Nullraumbewegungen entstehende Trajektorien verwendet werden, um ein dem Roboterarm zugrundeliegendes kinematisches Modell zu kalibrieren.

Zur Kalibrierung von Roboterarmen sind verschiedene Verfahren bekannt. Mit Hilfe eines Fadenmesssystems wird die Position eines Endeffektors, der sogenannte "Tool Center Point" (TCP), durch die Längen dreier Fäden gemessen, die zwischen dem TCP und einer Vorrichtung eingespannt sind. Der Roboterarm wird an vorgegebene Positionen verfahren und die mittels der Fäden ermittelten Positionen des TCP's und die entsprechenden durch eine Modellberechnung ermittelten Positionen werden verglichen. Ein Nachteil dieses Verfahrens besteht in dem hohen Raumbedarf bei der Kalibrierung. Ferner können bei diesem Verfahren ausschliesslich kartesische Positionen für den TCP ermittelt werden, wobei mögliche Orientierungsabweichungen bezüglich des TCP's nicht erfasst werden.

Ferner sind optische Kalibrierverfahren bekannt, bei denen beispielsweise unter Verwendung reflektierender Markierungen an dem TCP unterschiedliche Positionen desselben erfasst werden. Für eine optische Kalibrierung können auch Interferenzen bei Reflexionen eines Lichtstrahls, beispielsweise eines Lasers, an einem speziellen an dem TCP angeordneten Werkzeug analysiert werden. Optische Kalibriermethoden haben den Nachteil, dass der Arbeitsraum des Roboterarmes bei der Kalibrierung keine optischen Hindernisse aufweisen darf. Ausserdem ist bei einer optischen Kalibrierung darauf zu achten, dass bei der Erfassung unterschiedlicher Positionen des TCP's der Roboterarm selbst kein optisches Hindernis darstellt. Ein weiterer Nachteil besteht darin, dass optische Kalibrierverfahren zeitaufwendige Berechnungsmethoden erfordern, um die bei industriellen Anwendungen erforderlichen Genauigkeiten zu liefern.

Bei sogenannten oberflächenbasierten Kalibrierverfahren, werden in den Arbeitsraum eines Roboterarmes mehrere, beispielsweise drei planare Oberflächen eingebracht. Der Roboterarm wird an eine bestimmte Anzahl von Positionen auf den Oberflächen verfahren. Die für die angefahrenen Positionen berechneten Positionen des TCP's werden mit den realen Positionen auf den Oberflächen verglichen. Ein Nachteil dieser Kalibrierverfahren besteht darin, dass der TCP in ständigem Kontakt mit den Messoberflächen bewegt werden muss, wodurch abhängig von der Lage der Messoberflächen unterschiedliche Messfehler auftreten können.

In dem Artikel "Improving the Absolute positioning Accuracy of Robot Manipulators" von S. Hayati und M. Mirmirani, Journal of robotic Systems, Band 2, Dezember 1985, Seiten 307 bis 413 ist ein Roboterkalibrierverfahren beschrieben, bei dem eine Messspitze in die Werkzeugaufnahme am TCP eingespannt wird. Die Spitze wird in einem von einer Vielzahl von Trichtern positioniert, die in einer planen Messoberfläche angeordnet sind. Die so positioniert Spitze dient als Gelenk, um den Roboterarm um die von dem Trichter vorgegebene Position zu verfahren. Der TCP des Roboters ist durch die Messspitze in seinen translatorischen Freiheitsgraden eingespannt. Dadurch ermöglicht dieses Verfahren eine Positionskalibrierung des Roboters. Um eine hohe Genauigkeit im Arbeitsraum zu erreichen, erfordert dieses Verfahren die Positionierung der Messspitze in vielen Trichtern.

Ein gemeinsamer Nachteil bekannter Kalibrierverfahren besteht darin, dass umfangreiche Messaufbauten erforderlich sind, die ein Nachkalibrieren eines beispielsweise in der industriellen Fertigung verwendeten Roboterarmes verhindern oder zumindest erschweren. Ferner sind die Messbereiche beschränkt, so dass Messungen im gesamten Arbeitsraum eines Roboters nicht mit vertretbarem Aufwand durchgeführt werden können oder Messungen nicht für eine für den gesamten Arbeitsraum eines Roboters gültige Kalibrierung sorgen.

Aufgabe der vorliegenden Erfindung ist es, ein Verfahren bereitzustellen, das eine Kalibrierung von Roboterarmen auf einfache Weise ermöglicht, die auch ein Kalibrieren von Robotern im industriellen Einsatz ermöglicht.

Die vorliegende Erfindung stellt ein Verfahren zum Kalibrieren eines Roboterarmes bereit, bei dem Parameter definiert werden, die die Lage und Orientierung von Gelenken eines Roboterarmes charakterisieren. Hierfür kann ein Modell definiert werden, das die Kinematik des Roboterarmes beschreibt, z.B. ein Modell gemäss der Denavit-Hartenberg-Notation.

Der so genannte Tool-Center-Point (TCP), der als Referenzpunkt für den Endeffektor des Rotorarmes dient, wird an einer Referenzposition positioniert. Danach werden eine erste sogenannte Nullraumbewegung durchgeführt und die entsprechenden Gelenkwinkel für die Gelenke des Roboterarmes ermittelt. Unter Nullraumbewegungen sind Bewegungen eines Roboterarmes zu verstehen, bei denen die Position des Tool-Center-Points beibehalten wird.

Dies ist aber auch bei Robotern mit nicht redundanten Roboterarmen möglich, wenn diese durch Hinzufügen passiver oder aktiver Gelenke zu einem redundanten System erweitert werden. Zum Ermitteln der Gelenkwinkel ist es vorgesehen, wenigstens in einem Teilbereich des Arbeitsraumes des Roboters eine Nullraumbewegung auszuführen. Der Bereich des Arbeitsraumes des Roboters, der zur Kalibrierung verwendet wird, kann beispielsweise unter Berücksichtigung der Symmetrie der Gelenkwinkelgrenzen des Roboterarmes definiert werden.

Zur Kalibrierung des Roboterarmes, d.h. das Anpassen der Parameter an die reale Situation, werden die Parameter in Abhängigkeit der ermittelten Gelenkwinkel in erste aktuelle Werte geändert, d.h. erste aktuelle Parameterwerte geschätzt.

Zur Beurteilung des Kalibriervorganges auf der Grundlage der ersten Nullraumbewegung, wird für die ersten aktuellen Parameterwerte ein erster sogenannter Konditionsindex berechnet. Der Konditionsindex gibt die Schätzbarkeit der aktuellen Parameter an, d.h. welche der Parameter auf Grundlage der ersten Nullraumbewegung nicht oder nur schlecht schätzbar sind. Zur Bewertung der aufgrund der Schätzung der Parameterwerte erreichbaren Kalibriergenauigkeit kann beispielsweise die Maschinengenauigkeit des Roboters zugrunde gelegt werden.

Wenn sich aufgrund des ersten Konditionsindex ergibt, dass die ersten aktuellen Parameterwerte nicht zu einer Genauigkeit des Kalibriervorganges führen, der für einen Betrieb des Roboterarmes gewünscht wird, werden eine zweite Nullraumbewegung durchgeführt, zweite Gelenkwinkel bei dieser ermittelt und zweite aktuelle Parameterwerte in Abhängigkeit der zweiten Gelenkwinkel geschätzt.

Hierbei ist es vorgesehen, die zweite Nullraumbewegung bezüglich der ersten Referenzposition oder einer zweiten Referenzposition durchzuführen.

Vergleichbar zu dem ersten aktuellen Parameterwerten, wird für die zweiten aktuellen Parameterwerte ein zweiter Konditionsindex berechnet, der die Schätzbarkeit der zweiten aktuellen Parameterwerte angibt.

So können für die Kalibrierung des Roboterarmes die aktuellen Parameterwerte verwendet werden, die gemäß dem entsprechenden Konditionsindex eine bessere Schätzbarkeit aufweisen.

Ferner ist es möglich, auf Grundlage der ersten und der zweiten Nullraumbewegung, insbesondere auf der Grundlage der ersten und der zweiten Gelenkwinkel, dritte aktuelle Parameterwerte zu schätzen und zur Kalibrierung zu verwenden, wenn die zuvor genannten Konditionsindizes angegeben, dass sowohl die Schätzbarkeit der ersten als auch der zweiten aktuellen Parameterwerte jeweils für sich betrachtet ein gewünschtes Kalibrierergebnis liefern.

Insbesondere bei der Durchführung von Nullraumbewegungen, bei denen der Tool-Center-Point an einer Position festgelegt ist, kann es zu Beschädigungen des Roboterarmes kommen. Dies wird dadurch vermieden, dass die Nullraumbewegung(en) so durchgeführt wird (werden), dass an den Gelenken wirkende Kräfte und/oder Momente nicht so groß werden, dass Beschädigungen des Roboterarmes auftreten können. Ferner können auf diese Weise die an den Gelenken wirkenden Kräfte und/oder Momente so begrenzt werden, dass der Kalibriervorgang nicht durch bei der Nullraumbewegung(en) auftretenden, noch tolerierbaren Verformungen des Roboterarmes verfälscht wird. Derartige Verformungen ergeben sich beispielsweise aus der Elastizität der einzelnen Roboterarmsegmente und der Gelenke.

Die Durchführung der Nullraumbewegung(en) kann von einem Benutzer manuell, d.h. Führung des Roboterarmes entlang einer durch den Benutzer vorgegebenen Nullraumtrajektorie, oder durch den Roboter gesteuert durchgeführt werden.

Vorzugsweise wird bei einer manuell durchgeführten Nullraumbewegung ein sogenanntes Gravitationskompensationsverfahren verwendet, bei dem sogenannte rücktreibbare Gelenke zum Einsatz kommen. Bei der Gravitationskompensations werden an den Gelenken des Roboterarmes Momente erzeugt, die es einem Benutzer erlauben, diesen im Wesentlichen kraftfrei durch den Nullraum zu bewegen. Hierfür können mittels geeigneter Sensoren an den Gelenken Momente erfasst werden, die aufgrund der Masse und/oder Nullraumbewegung selbst an den Gelenken wirken, um Momente an den Gelenken zu erzeugen, die die erfassten Momente kompensieren. Alternativ ist es möglich, unter Verwendung eines geeigneten Modells Momente zu berechnen, die (voraussichtlich) aufgrund der Masse des Roboterarmes und/oder einer Nullraumbewegung an den Gelenken auftreten, um dann Momente an den Gelenken zu erzeugen, die die berechneten Momente kompensieren.

Bei einer gesteuerten Durchführung der Nullraumbewegung(en) werden Kräfte und/oder Momente an den Gelenken ermittelt, um die Nullraumbewegung(en) so zu steuern, dass es zu keiner Beschädigung der Gelenke kommt. Hierbei ist es beispielsweise möglich, an dem Tool-Center-Point einen Kraft- und/oder Momentensensor anzuordnen, um aus den von diesem erfassten Kräften und/oder Momenten Gelenkkräfte und/oder -momente zu ermitteln.

Für die Parameter können Anfangswerte festgelegt werden, die als Startwerte für die Kalibrierung dienen und mit den Gelenkwinkeln zur Schätzung der aktuellen Parameterwerte verwendet werden. Als Anfangswerte können beispielsweise Werte verwendet werden, die sich aus den konstruktiven Vorgaben für die Herstellung des Roboterarmes ergeben (z.B. Längen der Verbindungselemente).

Ferner können in Abhängigkeit der ermittelten Gelenkwinkel und der Parameteranfangswerte eine Position für den Tool-Center-Point berechnet und mit der Referenzposition verglichen werden, um eine Abweichung zwischen der Referenzposition und der berechneten TCP-Position zu ermitteln. Dann ist es möglich, die aktuellen Parameterwerte in Abhängigkeit der ermittelten Abweichung zu schätzen.

Unter Verwendung der Abweichung ist es möglich, Änderungswerte für die Parameter zu berechnen, und in Abhängigkeit der Änderungswerte die aktuellen Parameterwerte zu schätzen.

Es ist auch vorgesehen, weitere Gelenkwinkel bei der Nullraumbewegung zu ermitteln und jeweils eine entsprechende Position für den Tool-Center-Point zu berechnen, um für jede TCP-Position die jeweilige Abweichung von der Referenzposition zu berechnen.

Zur Anpassung der genannten Parameter kann für jede der Abweichungen ein Änderungswert berechnet werden. In Abhängigkeit eines ersten der Änderungswerte können dann die Anfangswerte für die Parameter in aktuelle Parameterwerte und nachfolgend neue aktuelle Parameterwerte in Abhängigkeit von jeweils einem anderen der Änderungswerte durch Ändern eines vorherigen aktuellen Parameterwertes geschätzt werden.

Es ist auch vorgesehen, aus den für die TCP-Positionen ermittelten Abweichungen eine Gesamtabweichung zu ermitteln, um die Anfangswerte in Abhängigkeit der Gesamtabweichung in aktuelle Parameterwerte zu ändern.

Eine weitere Grösse, die die Kalibrierqualität beeinflusst, ist die Wahl der Referenzposition. Um eine geeignete Referenzposition zu ermitteln, werden mehrere unterschiedliche Positionen festgelegt, für die (zu erwartende) Abweichungen basierend auf einer entsprechenden Schätzung der Parameterwerte berechnet werden. Die Abweichungen ermöglichen Aussagen darüber, welche Positionen als Referenzpositionen geeignet sind. So wird die Positionen mit der geringsten Abweichung als Referenzposition definiert.

Zur Bewertung unterschiedlicher Positionen, die als Referenzposition in Frage kommen, kann für jede dieser Positionen eine als Beobachtbarkeitsindex bezeichnete Grösse ermittelt werden, die die Beobachtbarkeit des Einflusses von Änderungen der Parameterwerte auf die Abweichungen berechneter TCPPositionen von entsprechenden Referenzpositionen angibt. Dabei ist es vorgesehen, die Position als Referenzposition zu verwenden, für die im Bereich des Maximums des entsprechenden Beobachtbarkeitsindexes die Anzahl möglicher Gelenkkonfigurationen am grössten ist.

Ergeben sich aufgrund des Beobachtbarkeitsindex mehrere geeignete Referenzpositionen, ist es vorgesehen, für den Beobachtbarkeitsindex eine Untergrenze festzulegen. Zur Auswahl von Referenzpositionen werden dann Positionen berücksichtigt, deren Beobachtbarkeitsindex oberhalb dieser Grenze liegt.

Das Verfahren kann so durchgeführt werden, dass die räumliche Lage und Orientierung einer Referenzposition relativ zu dem Roboterarm, insbesondere zu dessen Basis vorgegeben ist.

Alternativ ist es möglich, mehrere Referenzpositionen, vorzugsweise vier Referenzpositionen zu verwenden, deren räumliche Lage und Orientierung relativ zueinander bekannt ist. Hierbei ist es nicht erforderlich, deren räumliche Lage und Orientierung relativ zu dem Roboterarm zu kennen. Vielmehr wird die räumliche Lage und Orientierung der Referenzpositionen relativ zu dem Roboterarm unter Verwendung der für die Referenzpositionen ermittelten Gelenkwinkel berechnet.

Wie oben ausgeführt kann das erfindungsgemässe Verfahren auch bei nicht redundanten Roboterarmen verwendet werden kann, wenn beispielsweise zur Durchführung der Nullraumbewegung ein passives Gelenk zwischen dem Tool-Center-Point und der Referenzposition angebracht wird.

Vorzugsweise wird bei der Durchführung der Nullraumbewegung die Lage und Orientierung des Tool-Center-Points zu der Referenzposition beibehalten.

Bei der folgenden Beschreibung bevorzugter Ausführungsformen wird auf die folgenden Figuren Bezug genommen, von denen zeigen:

Fig. 1        eine schematische Darstellung von Koordinatensystemen für Gelenke eines Roboterarmes gemäss der DenavitHartenberg-Notation,

Fig. 2        eine schematische Darstellung eines Rotorarmes,

Fig. 3        eine schematische Darstellung von Koordinatensystemen des Roboterarmes von Fig. 2 gemäss der DenavitHartenberg-Notation,

Fig. 4        eine schematische Darstellung für eine Nullraumbewegung des Roboterarmes von Fig. 2,

Fig. 5a-c    Kennlinien für den Beobachtbarkeitsindex $O_4$, bei Gelenkkonfigurationen des Roboterarmes von Fig. 2,

Fig. 6        eine schematische Darstellung eines Kalibrierkörpers,

Fig. 7        eine schematische räumliche Darstellung des Kalibrierkörpers von Fig. 6,

Fig. 8        eine schematische Darstellung von Beziehungen zwischen variablen Positionen eines Kalibrierkörpers und der Basis des Roboterarmes von Fig. 2,

Fig. 9        eine schematische räumliche Darstellung eines weiteren Kalibrierkörpers, und

Fig. 10      eine Kennlinie des Beobachtbarkeitsindex $O_4$ für Nullraumbewegungen des Roboterarmes von Fig. 2 bei Verwendung des Kalibrierkörpers von Fig. 8.

Grundlagen

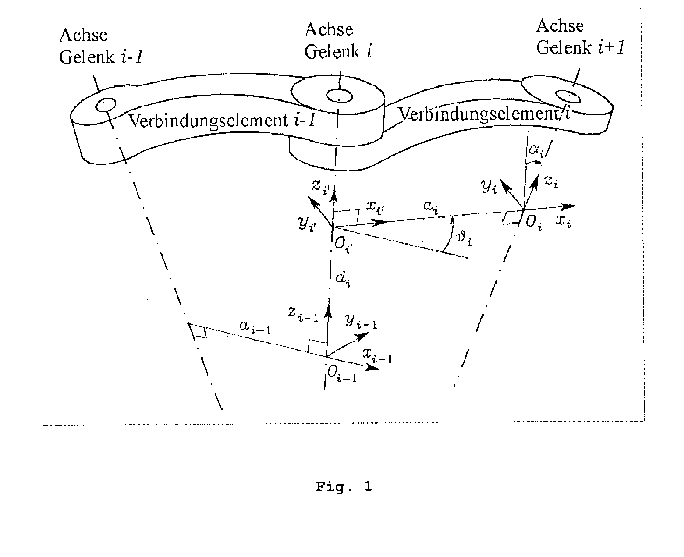

Bei den in folgenden exemplarisch beschriebenen Kalibrierverfahren wird die sogenannte Denavit-Hartenberg-Notation (im folgenden kurz DH-Notation) zugrundegelegt, die unter Bezugnahme auf Fig. 1 erläutert wird. Für die Festlegung von Bewegungen eines Koordinatensystemes eines Verbindungselementes i relativ zu dem Koordinatensystem eines vorhergehenden Verbindungselementes i-1 werden entlang der Gelenksachse des Gelenks i+l eine $z_i$-Achse und entlang der Gelenksachse des Gelenkes i eine $z_{i-1}$-Achse gelegt. Der Ursprung $O_i$ des Koordinatensystemes des Gelenkes i+l wird auf den Schnittpunkt der $z_i$-Achse mit der gemeinsamen Normalen der $z_{i-1}$-Achse und der $z_i$-Achse gelegt. Der Ursprung $O_{i'}$ des Koordinatensystemes des Gelenkes i wird ebenfalls an dem Schnittpunkt zwischen der gemeinsamen Normalen der $z_{i-1}$-Achse und der $z_i$-Achse gelegt. Eine $x_i$-Achse wird entlang der gemeinsamen Normalen zwischen der $z_{i-1}$-Achse und der $z_i$-Achse in Richtung von dem Gelenk i zu dem Gelenk i+l gelegt. Danach wird eine $y_i$-Achse so gewählt, dass ein rechtshändiges Koordinatensystem entsteht. Dies wird für alle Gelenke eines Roboterarmes durchgeführt. Für das raumfeste, sogenannte nullte Koordinatensystem eines Roboterarmes (i. e. das Koordinatensystem für das Gelenk an der Basis des Roboterarmes) wird nur die Richtung der $z_0$-Achse festgelegt. Der Ursprung $O_0$ und die $x_0$-Achse des nullten Koordinatensystemes können frei gewählt werden, sofern die $x_0$-Achse senkrecht auf der $z_0$-Achse steht.

Sind die Koordinatensysteme für die Gelenke eines Roboterarmes definiert, geben folgende Parameter die Position und die Orientierung des Verbindungselementes i relativ zu dem vorherigen Verbindungselement i-1 an:

- $a_i$:= Abstand zwischen den Koordinatensystemursprüngen $O_i$ und $0_{i'}$,

- $d_i$:= Abstand zwischen den Koordinatensystemursprüngen $O_{i'}$ und $0_{i-1}$ entlang der $z_{i-1}$Achse,

- $\alpha_i$:= Winkel zwischen der $z_i$-Achse und der $z_{i-1}$-Achse um die $x_i$-Achse ($\alpha_i > 0$ für Drehungen im Uhrzeigersinn), und

- $\theta_i$:= Winkel zwischen der $x_{i-1}$-Achse und der $z_{i-1}$-Achse um die $z_{i-1}$Achse ($\theta_i > 0$ für Drehungen im Uhrzeigersinn).

Zur Transformation von Koordinaten des Koordinatensystemes für das Verbindungselement i in Koordinaten des Koordinatensystemes für das Verbindungselement i-1 wird folgende homogene Transformationsmatrix $A_{i'}^{i-1}$ verwendet:

$$\underline{A}_i = A_{i'}^{i-1} = Rot_z(\theta_i)\cdot Trans_z(\alpha_i)\cdot Rot_x(\alpha_i) \qquad .[1]$$

Hierbei gibt $Rot$(g,$\gamma$) eine Rotation um eine g-Achse über einen Winkel $\gamma$ an. $Trans$ (g,l) beschreibt eine Translation entlang der g-Achse über einen Weg I.

Die Position des TCP's eines Roboterarmes wird mittels einer Multiplikation der einzelnen Transformationsmatrizen berechnet:

$$\underline{T}_0^n = \underline{A}_0 \cdot \underline{A}_1 \cdots \underline{A}_n \qquad .[2]$$

Die Matrix $\underline{T}_0^n$ beschreibt das kinematische Modell des Roboterarmes.

Zur Berechnung von Positionen und Orientierungen $\underline{x}$ des TCP's aus vorgegebenen Gelenkwinkeln $\underline{q}$ wird eine sogenannte Vorwärtskinematik als Berechnungsmodell verwendet:

$$\underline{x}=\underline{f}(\underline{q}) \qquad .[3]$$

Um in Abhängigkeit von Positionen und Orientierungen des TCP's Gelenkkonfigurationen zu ermitteln, die die Gleichung [3] für die Vorwärtskinematik erfüllen, wird eine Umkehrabbildung der Vorwärtskinematik, die sogenannte Inverskinematik, verwendet:

$$\underline{q}=\underline{f}^{-1}(\underline{x}) \qquad .[4]$$

Bei der Kalibrierung eines Roboterarmes werden für Abbildungen von dem kartesischen Parameterraum, in dem Positionen des TCP's angegeben werden, in den Gelenkwinkelraum eine Jacobimatrix $\underline{J}$ verwendet.

Die Jacobimatrix J bildet den Raum der Winkelgeschwindigkeiten der Gelenke in den Raum der kartesischen Geschwindigkeiten ab, d.h. die Jacobimatrix $\underline{J}$ gibt eine Ableitung der Gleichungen [3] und [4] nach der Zeit an:

$$\dot{\underline{x}} = \underline{J}(\underline{q})\dot{\underline{q}} \tag{5}$$

$$\dot{\underline{q}} = \underline{J}^{-1}(\underline{q})\dot{\underline{x}} \tag{6}$$

Für Positionen und Orientierungen $\underline{x}$ des TCP's und Gelenkwinkeln $\underline{q}$ ergibt sich für die Jacobimatrix $\underline{J}$:

$$\underline{J}(\underline{q}) = \frac{\partial \underline{x}}{\partial \underline{q}} \tag{7}$$

Bei der Kalibrierung, d.h. einer Anpassung des Berechnungsmodells an die realen Verhältnisse eines Roboterarmes, werden Abweichungen der im Modell berechneten Positionen des TCP's von der realen Position des TCP's ermittelt. Um ein Modell zu erhalten, bei dem Unterschiede zwischen berechneten und realen Positionen für den TCP eine definierte Genauigkeitsschranke unterschreiten, werden die DH-Parameter in geeigneter Weise verändert. Hierbei ist es vorteilhaft, Gelenkkonfigurationen zu finden, bei denen Auswirkungen von Veränderungen der DH-Parameter auf zu berechnende Positionen des TCP's, genauer auf Fehler zwischen berechneten und realen Positionen des TCP's, möglichst gross sind.

Zur Kalibrierung eines Roboterarmes auf der Grundlage der DHNotation ist es notwendig, die Vorwärtsabbildung nach den DH-Parametern abzuleiten. Dies führt zu einem speziellen Typ der Jacobimatrix, einer sogenannten Identifikationsmatrix.

Da es sich hierbei um ein nicht lineares Problem handelt, werden zur Lösung Anfangsschätzwerte für die DH-Parameter verwendet, um mittels der Identifikationsmatrix eine Linearisierung zu erreichen. Zur Aufstellung der Identifikationsmatrix wird ein Roboterarm als sogenannte geschlossene kinematische Kette, d.h. mit festgelegter Position für den TCP, mit mindestens einem Freiheitsgrad betrachtet.

Als Ausgangsschätzwerte für die DH-Parameter werden für eine vorgegebene Position für den TCP die DH-Parameter verwendet, die sich auf der Grundlage des nicht kalibrierten Modells für eine Gelenkposition ergeben.

Unter Verwendung der Gleichung [2] wird eine Position $\tilde{\underline{x}}_k$ für den TCP berechnet und mit der realen TCP $\underline{x}_{rk}$ verglichen:

$$\underline{x}_{rk} = \tilde{\underline{x}}_k\left(\underline{d}, \underline{\theta}_k + \underline{\theta off}_k, \underline{a}, \underline{\alpha}\right) + \Delta\underline{x}_k \tag{8}$$

Hierbei gibt $D\underline{X}_k$ die Abweichung der berechneten Position $\tilde{\underline{x}}_k$ von der realen Position $\underline{X}_{rk}$ an, wobei der Index k unterschiedliche Gelenkkonfigurationen bezeichnet.

Zur Kalibrierung werden die DH-Parameter so verändert, dass die Abweichung $D\underline{x}_k$ minimiert wird. Eventuell dabei auftretende nicht kompensierbare Fehler, werden in einem Fehlervektor $\underline{e}_{fk}$ zusammengefasst:

$$\Delta\tilde{\underline{x}}_k = \Delta\underline{x}_k - \underline{e}_{fk} \tag{9}$$

Unter Verwendung der Gleichung

$$\Delta\tilde{\underline{x}}_k = \frac{\partial \tilde{\underline{x}}_k}{\partial \underline{\varphi}} \Delta\underline{\varphi} \tag{10}$$

wird für eine Gelenkkonfiguration k mit Gelenkwinkelpositionen mit einem Anfangsschätzwert $\underline{\varphi}_0 = (\underline{d}^T, \underline{\theta}^T_{off}, \underline{a}^T, \underline{\alpha}^T)^T$
die Abweichung $D\underline{x}_k$ berechnet:

$$\Delta \underline{x}_k = \frac{\partial \widetilde{\underline{x}}_k}{\partial \underline{d}}\bigg|_{\underline{\varphi}_0} \Delta \underline{d} + \frac{\partial \widetilde{\underline{x}}_k}{\partial \underline{\theta}}\bigg|_{\underline{\varphi}_0} \Delta \underline{\theta} + \frac{\partial \widetilde{\underline{x}}k}{\partial \underline{a}}\bigg|_{\underline{\varphi}_0} \Delta \underline{a} + \frac{\partial \widetilde{\underline{x}}k}{\partial \underline{\alpha}}\bigg|_{\underline{\varphi}_0} \Delta \underline{\alpha} + \underline{e}f_k \quad . \text{[11]}$$

Mit dem Parametervektor $\varphi$ für die DH-Parameter und den Vektor
der Parameterveränderungen $D\varphi = \varphi_{neu} - \varphi_{alt}$ wird eine Identifikationsmatrix berechnet. Hier besteht die Identifikationsmatrix aus vier verbundenen Jacobimatrizen. Die Identifikationsmatrix bildet den Vektorraum der Veränderungen der DH-Parameter in den Raum der kartesischen Positionsveränderungen ab:

$$\underline{C}_k = \frac{\partial \widetilde{\underline{x}}}{\partial \underline{\varphi}}\bigg|_{\underline{\varphi}_0} = \left( \frac{\partial \widetilde{\underline{x}}_k}{\partial \underline{d}} \quad \frac{\partial \widetilde{\underline{x}}_k}{\partial \underline{\theta}} \quad \frac{\partial \widetilde{\underline{x}}_k}{\partial \underline{a}} \quad \frac{\partial \widetilde{\underline{x}}_k}{\partial \underline{\alpha}} \right) \quad . \text{[12]}$$

Unter Verwendung der Gleichungen [11] und [12] werden die durch die Abweichung $D\underline{x}_k$ angegebenen Positions- und Orientierungsfehler in Abhängigkeit der jeweiligen Parameteränderung $D\varphi$ berechnet:

$$\begin{pmatrix} \Delta \underline{x}_k = 1 \\ \vdots \\ \Delta \underline{x}_k = m \end{pmatrix} = \begin{pmatrix} \underline{C}_k = 1 \\ \vdots \\ \underline{C}_k = m \end{pmatrix} \cdot \Delta \underline{\varphi} + \begin{pmatrix} \Delta \underline{e}f_k = 1 \\ \vdots \\ \Delta \underline{e}f_k = m \end{pmatrix}$$

$$\Delta \underline{x}_k = \underline{C}_k \Delta \underline{\varphi} + \underline{e}f_k \quad . \text{[13]}$$

Die Dimension der Matrix $\underline{C}_k$ hängt von den Freiheitsgraden (DOF = Degrees of Freedom) des verwendeten Roboterarmes und von der Anzahl der zu bestimmenden Parameter ab.
Bei einem redundanten Roboterarm mit sieben Gelenken und der vier DH-Parameter pro Gelenk ergibt sich eine Anzahl von 28 Parametern, die für die Matrix $\underline{C}_k$ zu bestimmen sind. Ausgehend von Gleichung [13] kann die Identifikationsmatrix (siehe Gleichung [12]) für eine Betrachtung der Empfindlichkeit der Positions- und Orientierungsfehler in Abhängigkeit von Parameterveränderungen und zur Berechnung von Parameterveränderungen verwendet werden.
Hierfür kann z.B. eine Singulärwertzerlegung (SVD; Englisch: Singular Value Decomposition) der Identifikationsmatrix $\underline{C}_k$ verwendet werden:

$$\underline{C}_k = \left( \underline{U}_k \underline{\Sigma}_k \underline{V}_k^T \right)$$

$$\underline{C}_k^+ = \left( \underline{U}_k \underline{\Sigma}^+ \underline{V}_k^T \right) \quad , \text{[14]}$$

wobei die Matrix $\underline{\Sigma}_k$ eine Singulärwertmatrix ist und die Matrizen $\underline{U}_k$ und $\underline{V}_k$ zwei orthogonale Matrizen wiedergeben.
Für die pseudoinverse Matrix der Identifikationsmatrix $\underline{C}_k$ gilt:

$$\underline{C}+ = \left( \underline{V} \underline{\Sigma}^{+} \underline{U}^{T} \right) \qquad .[15]$$

Parameterveränderungen für die DH-Parameter lassen sich dann wie folgt berechnen:

$$\Delta\underline{\varphi} = \underline{C}^{+} \Delta\underline{X}. \qquad [16]$$

Um für eine vorgegebene Position des TCP's Gelenkkonfigurationen zu ermitteln, für die eine Schätzung der DH-Parameter optimiert durchgeführt werden kann, wird aus der Singulärmatrix ein sogenannter Beobachtungsindex $O_4$ berechnet (siehe: "The calibration index and taxonomy for robot kinematic calibration methods", J. M. Hollerbach und Ch. W. Wrampler, International Journal of Robotics Research, 15, 573-591, 1996). Der Beobachtungsindex $O_4$, charakterisiert die Beobachtbarkeit des Einflusses von Veränderungen der DH-Parameter auf den während des Kalibriervorganges ermittelten Fehler zwischen der realen Position und berechneten Positionen für den TCP's. Je grösser der Beobachtungsindex $O_4$, ist, desto besser ist die Beobachtbarkeit. Der Beobachtungsindex $O_4$, wird auch als "RauschVerstärkungs-Index" bezeichnet, der die Verstärkung der Fehler angibt. Durch dieses Bewertungskriterium für eine Schätzung der

DH-Parameter werden Gelenkkonfigurationen, für die Parameterveränderungen schlecht zu schätzen sind, hervorgehoben, während Gelenkkonfigurationen mit einer besseren Schätzmöglichkeit ermittelt werden können.

Roboterkinematik

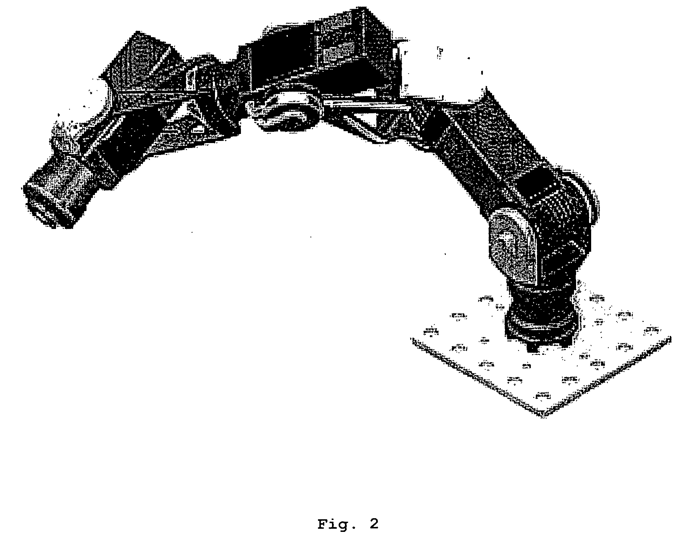

Der in Fig. 2 dargestellte Roboterarm ist ein kinematisch redundanter Roboterarm mit sieben rotatorischen Gelenken, die jeweils antriebsseitig und abtriebsseitig eine hochauflösende Positionssensorik zur Bestimmung der Stellungen der einzelnen Gelenke aufweisen.

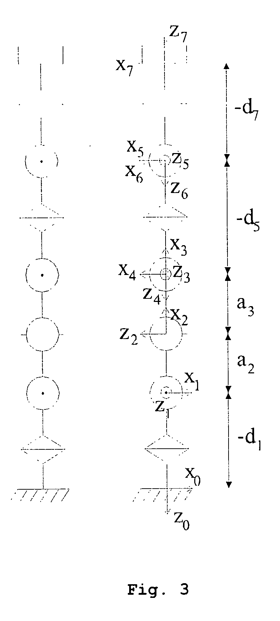

Die für die DH-Notation benötigten Koordinatensysteme des verwendeten Roboterarmes sind in Fig. 3 dargestellt. Hierbei entspricht die z-Achse des Basiskoordinatensystems der Drehachse des ersten Gelenkes des Roboterarmes. Nach der Festlegung der Koordinatensysteme für die Gelenke werden die Transformationsmatrizen für zwei aufeinanderfolgende Koordinatensysteme berechnet (siehe Gleichung [1]). Wie durch Gleichung [2] angegeben, ergibt sich die Transformationsmatrix $\underline{T}_0^7$ .für Transformationen aus dem raumfesten Basiskoordinatensystem des Roboterarmes in das Koordinatensystem für den TCP aus dem Produkt der Transformationsmatrizen aller Koordinatensysteme der Gelenke.

Für die in Fig. 3 gezeigten Koordinationssysteme ergeben sich folgende DH-Parameter für den Roboterarm:

| Gelenk $i$ | $d_i$[mm] | $\theta_i$[rad] | $a_i$[mm] | $\alpha_i$[rad] |
|---|---|---|---|---|
| 1 | $d_1$ | $q_1$ | 0 | $-\pi/2$ |
| 2 | 0 | $\pi/2 + q_2$ | $a_2$ | $-\pi/2$ |
| 3 | 0 | $q_3$ | $a_3$ | $-\pi/2$ |
| 4 | 0 | $-\pi/2 + q_4$ | 0 | $\pi/2$ |
| 5 | $d_5$ | $q_5$ | 0 | $-\pi/2$ |
| 6 | 0 | $q_6$ | 0 | $\pi/2$ |
| 7 | $d_7$ | $q7$ | 0 | $\pi$ |

Ferner wurden für eine vollständige Beschreibung des kinematischen Modells Begrenzungen für die Gelenkwinkelbereiche der Gelenke definiert:

| Gelenk $i$ | Winkelbereichsgrenzen |
|---|---|
| 1 | $\pm 170° = \pm 2.9671 rad$ |
| 2 | $\pm 100° = \pm 2.2689 rad$ |
| 3 | $\pm 120° = \pm 2.0944 rad$ |

(fortgesetzt)

| Gelenk $i$ | Winkelbereichsgrenzen |
|---|---|
| 4 | $\pm130°=\pm2.2689\,rad$ |
| 5 | $\pm170°=\pm2.9671\,rad$ |
| 6 | $\pm130°=\pm2.2689\,rad$ |
| 7 | $\pm170°=\pm2.9671\,rad$ |

Wie oben ausgeführt, werden beim Kalibrieren die DH-Parameter verändert. Hierfür werden die DH-Parameter jeweils mit einem variablen Parameteranteil versehen:

| Gelenk $i$ | $d_i$[mm] | $\theta_i$[rad] | $a_i$[mm] | $a_i$[rad] |
|---|---|---|---|---|
| 1 | $d_1 + \Delta d_1$ | $q_1 + \Delta\theta_1$ | $0 + \Delta a_1$ | $-\pi/2 + \Delta\alpha_1$ |
| 2 | $0 + \Delta d_2$ | $\pi/2 + q_2 + \Delta\theta_2$ | $a_2 + \Delta a_2$ | $-\pi/2 + \Delta\alpha_2$ |
| 3 | $0 + \Delta d_3$ | $q_3 + \Delta\theta_3$ | $a_3 + \Delta a_3$ | $-\pi/2 + \Delta\alpha_3$ |
| 4 | $0 + \Delta d_4$ | $-\pi/2 + q_4 + \Delta\theta_4$ | $0 + \Delta a_4$ | $\pi/2 + \Delta\alpha_4$ |
| 5 | $d5 + \Delta d_5$ | $q_5 + \Delta\theta_5$ | $0 + \Delta a_5$ | $-\pi/2 + \Delta\alpha_5$ |
| 6 | $0 + \Delta d_6$ | $q_6 + \Delta\theta_6$ | $0 + \Delta a_6$ | $\pi/2 + \Delta\alpha_6$ |
| 7 | $d_7 + \Delta d_7$ | $q_7 + \Delta\theta_7$ | $0 + \Delta a_7$ | $\pi + \Delta\alpha_7$ |

Um von mehreren Positionen für den TCP die zu ermitteln, die eine optimierte Beobachtbarkeit des Einflusses von Veränderungen der DH-Parameter auf den während des Kalibriervorganges ermittelten Fehler ermöglichen, werden für verschiedene Positionen für den TCP sogenannte Nullraumbewegungen des Roboterarmes vorab untersucht.

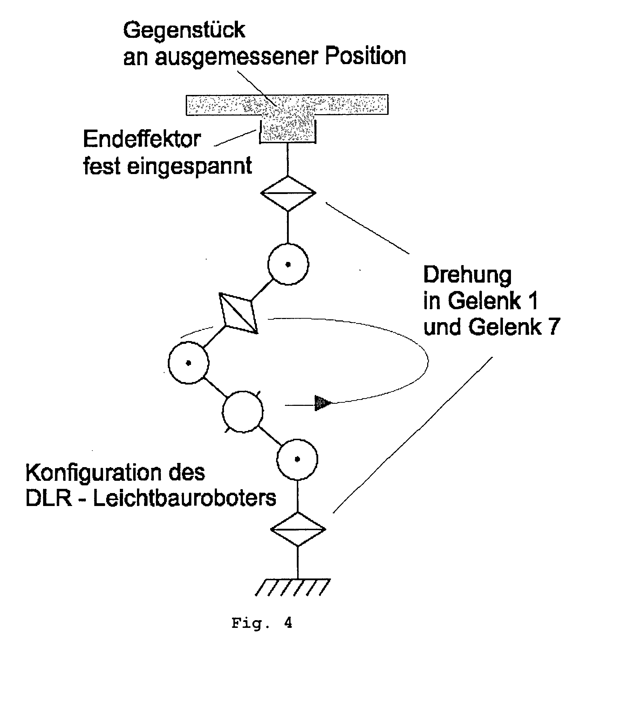

Aufgrund der Redundanz des Roboterarmes kann eine Position des TCP's durch unterschiedliche Gelenkkonfigurationen erreicht werden. Daher ist es möglich, für eine vorgegebene Position für den TCP den Roboterarm zu bewegen, d.h. Nullraumbewegungen durchzuführen, ohne dabei die Position des TCP's zu verändern (siehe Fig. 4).

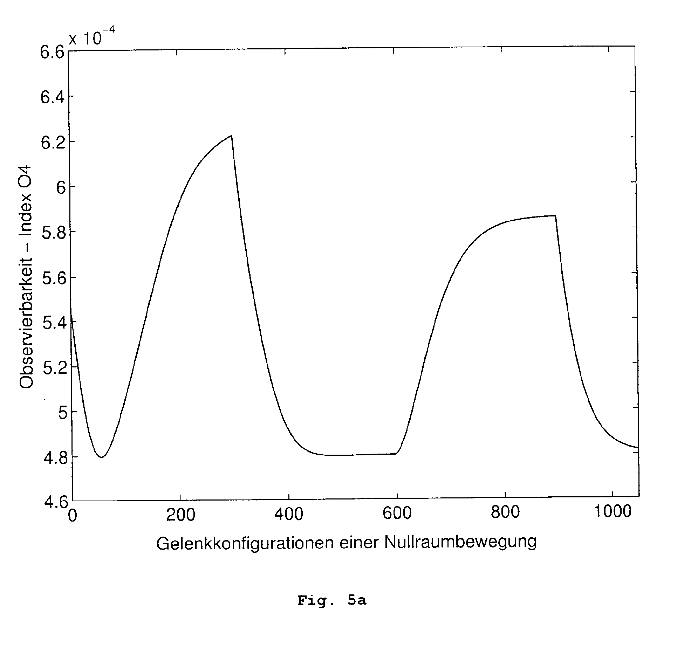

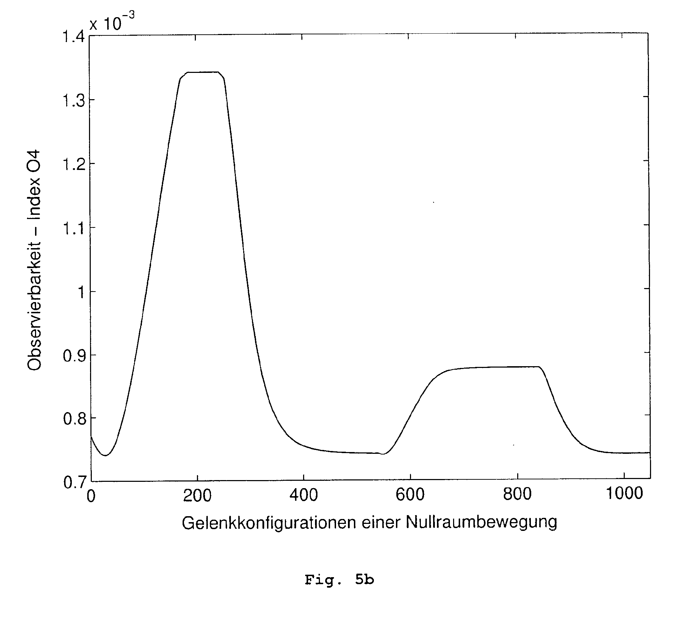

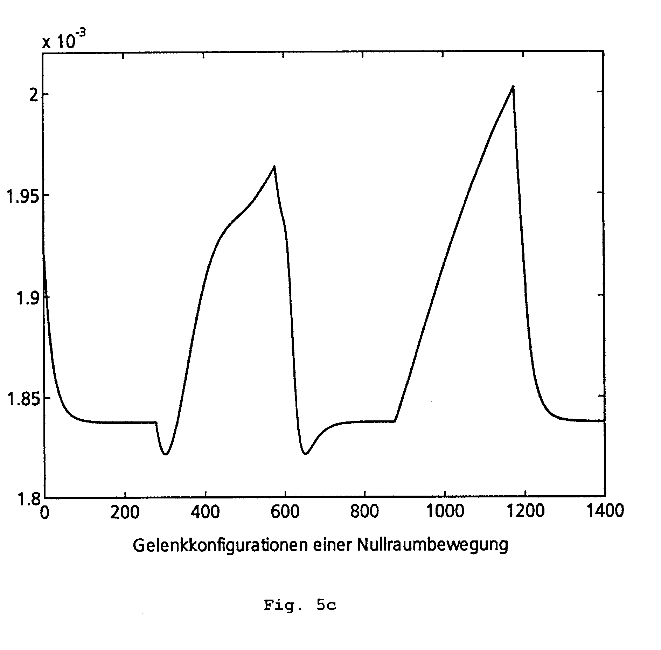

Für unterschiedliche Positionen für den TCP werden für die entsprechenden Gelenkkonfigurationen die Beobachtbarkeitsindices 0gberechnet, die, wie in Fig. 5a-c dargestellt, als Kennlinien wiedergegeben werden können. Für Gelenkkonfigurationen mit einem hohen Beobachtbarkeitsindex $O_4$ ist eine gute Identifikation der DH-Parameter gewährleistet. Bei einer vergleichsweise geringen Anzahl von Gelenkkonfigurationen im Bereich eines Maximums eines Beobachtungsindexes $O_4$, wie beispielsweise bei der in Fig. 5c dargestellten Kennlinie, steht nur ein geringer Bereich an Nullraumbewegungen zur Verfügung. Dementsprechend sind für eine Beschreibung der entsprechenden Position des TCP's vergleichsweise weniger Gelenkkonfigurationen möglich, wodurch der Kalibriervorgang verschlechtert werden kann.

Wie in Fig. 4 schematisch dargestellt werden zur Kalibrierung Nullraumbewegungen durchgeführt. Dies kann durch eine manuelle Betätigung des Roboterarmes oder eine Positionskommandierung des Roboterarmes vorgenommen werden.

Um, wie eingangs ausgeführt, die Verspannungskräfte des Roboters gering zu halten, kann die als Gravitationskompensation bezeichnete Momentenregelung oder eine Positionsregelung verwendet werden.

Bei der Gravitationskompensation wird der Roboterarm manuell durch den Nullraum bewegt, wobei an den Gelenken wirkende Masse- und/oder bewegungsabhängige Momente, oder alternativ modellbasiert berechnete, zu erwartende Momente, erfasst werden, um in Abhängigkeit von diesen an den Gelenken Momente aktiv zu erzeugen, die die erfassten (berechneten) Momente kompensieren, um so eine manuelle Bewegung des Roboterarmes zuzulassen.

Bei der Positionsregelung wird eine kommandierte Bewegung vorgegeben, wobei mittels Kraftsensoren an einzelnen/mehreren/allen Gelenken und/oder am TCP wirkende Kräfte und/oder Momente ermittelt oder erfasst werden, um die Bewegung des Roboterarmes so durchzuführen, dass die zulässigen Kräfte und/oder Momente an den Gelenken nicht überschritten werden.

Aufgrund der Symmetrie der Gelenkwinkelgrenzen ist es vorgesehen, eine Hälfte des Arbeitsraumes des Roboters zur Kalibrierung zu verwenden. Während der Nullraumbewegungen für eine vorgegebene reale Position für den TCP werden über die Vorwärtskinematik berechnete Werte für diese Position sowie entsprechende Gelenkkonfigurationen ermittelt.

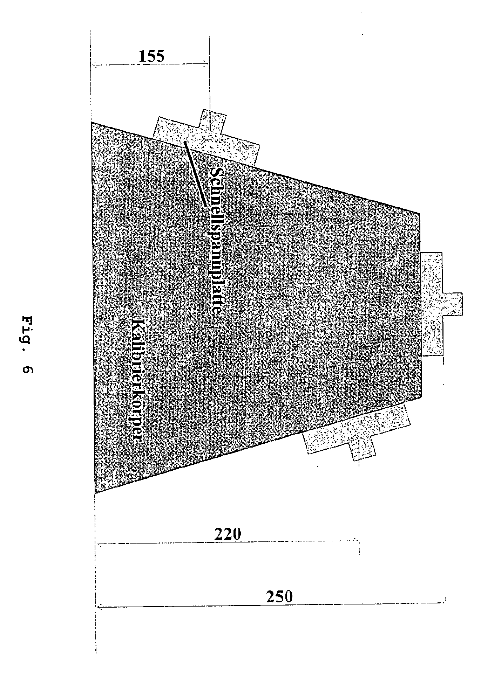

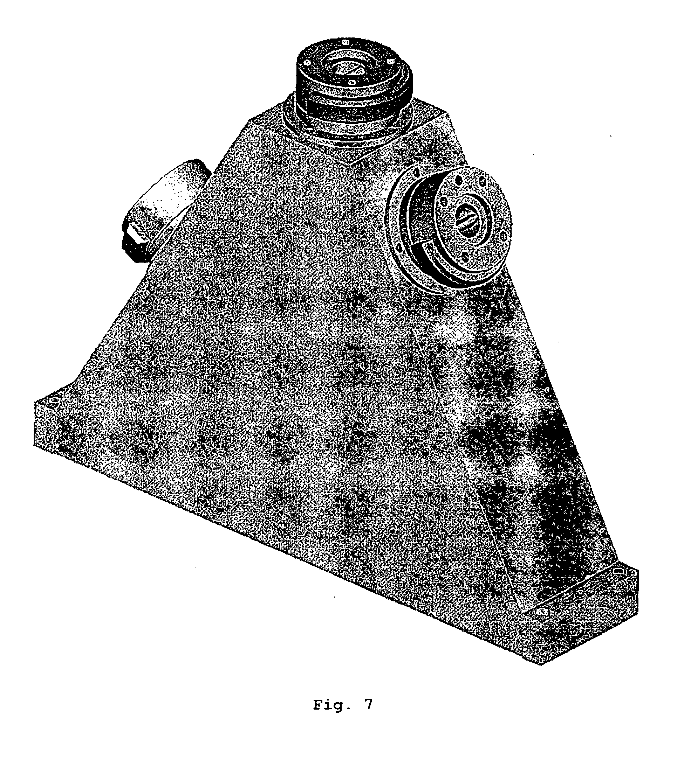

Zur Vorgabe einer Position für den TCP wird ein in Fig. 6 und 7 schematisch dargestellter Kalibrierkörper verwendet, der drei verschiedene Positionen für den TCP definiert. Es ist festgestellt worden, dass die Beobachtbarkeit verbessert werden kann, je näher eine vorgegebene Position für den TCP dem Inertialsystem des Roboterarmes liegt. Ferner wirken sich Positionen für den TCP mit windschiefer Orientierung zum Inertialsystem des Roboterarmes positiv auf die Schätzbarkeit der DH-Parameter aus. Eine weitere Verbesserung kann erreicht werden, wenn sich die Position des Kalibrierkörpers nicht in der Nähe der Hauptachsen des Inertialsystems des Roboterarmes befindet.

In Abhängigkeit von vorgegebenen realen Position für den TCP kann es bei dem Kalibrierverfahren zu numerischen Instabilitäten kommen. Falls erforderlich, kann dies vermieden werden, indem zur Kalibrierung Gelenkkonfigurationen für eine oder mehrerer weitere vorgegebene reale Positionen für den TCP ermittelt werden. Hierbei werden Gelenkkkonfigurationen der weiteren vorgegebenen realen Positionen für den TCP verwendet, um Gelenkkonfigurationen der vorherigen vorgegebenen realen Position für den TCP so zu ergänzen, dass alle DH-Parameter geschätzt werden können.

Für eine Bewertung einer solchen Ergänzung wird mittels der obigen orthogonalen Matrix $\underline{V}$ (siehe Gleichung [14]) ein als Konditionsindex $K_i$ bezeichneter Index erstellt. Die Matrix $\underline{V}$ besteht aus orthogonalen Zeilenvektoren mit einem Betrag von 1. Aus der Matrix $\underline{V}$ werden die Vektoren aus beiden Nullraumbewegungen berücksichtigt, deren Singulärwerte in der Matrix $\underline{\Sigma}_k$ zu Null gesetzt sind. Aus der Summe der kreuzweise auf die Vektoren angewendeten Skalarprodukte kann der Konditionsindex $K_i$ berechnet werden:

$$K_i = \sum_j \left| \left( \underline{v}_a i \cdot \underline{v}_b j \right) \right| \quad \forall i,j \quad mit \begin{cases} \sigma_i = 0 \\ \sigma_i = 0 \end{cases} \qquad . [17]$$

Der Konditionsindex $K_i$ liegt im Bereich zwischen 0 und 2, wobei der Index i die Zeilennummer der Matrix $\underline{V}$ angibt. Je kleiner der Konditionsindex $K_i$ ist, desto besser können die DH-Parameter geschätzt werden.

Sind die Gelenkkonfigurationen mit den höchsten Empfindlichkeiten ermittelt, werden die Veränderungen der DH-Parameter identifiziert, wobei folgende Werte als Anfangsschätzwerte verwendet werden:

| Parameter | Wert [mm] |
|-----------|-----------|
| $d_1$ | -213 |
| $a_2$ | 250 |
| $a_3$ | 260 |
| $d_5$ | -338.5 |
| $d_7$ | -175.5 |

Für jede Gelenkkonfiguration wird eine numerisch bestimmte Identifikationsmatrix $\underline{C}_k$ berechnet, wobei mittels der Vorwärtskinematik durch Einsetzen der Gelenkwinkel die Position für den TCP aus Genauigkeitsgründen ein weiteres mal berechnet werden kann. Der Fehler zwischen der realen und der berechneten Position für den TCP sowie die Identifikationsmatrix $\underline{C}_k$ werden berechnet. Danach werden die einzelnen Identifikationsmatrizen $\underline{C}_k$ zu einer Matrix $\underline{G}$ und die einzelnen Positionsfehlervektoren zu einem Gesamtfehler $\underline{X}$ zusammengefasst. Wie oben ausgeführt, können hierfür 1, 2, 3 oder mehr Nullraumbewegungen zugrundegelegt werden.

Die oftmals grosse Matrix $\underline{G}$ kann mathematisch singulär sein. Um eine numerische Stabilität des Kalibrierverfahrens zu erreichen, werden Singulärwerte ausgewählt. Sind durch eine schlechte Konditionierung der Identifikationsmatrix einige Singulärwerte wesentlich kleiner als der Kehrwert des grössten Singulärwertes, werden die kleinen Singulärwerte zu Null gesetzt:

$$\underline{\Sigma} = \begin{pmatrix} \sigma_1 & 0 & \cdots & 0 & 0 \\ 0 & \sigma_2 & 0 & \cdots & 0 \\ \vdots & \vdots & \ddots & \vdots & \vdots \\ 0 & 0 & 0 & \sigma_{r-1} \ll O_4 \to 0 & 0 \\ 0 & 0 & 0 & 0 & \sigma_r \ll O_4 \to 0 \end{pmatrix} \qquad .[18]$$

Aus den Positionsänderungen D$\underline{X}$ ergibt sich die zu lösende Gleichung für die Parameterveränderungen bezüglich einer Positionsdifferenz:

$$\Delta\underline{\varphi} = \underbrace{\left( \underline{V}\,\underline{\Sigma}^+\,\underline{U}^T \right)}_{\underline{G}^+} \Delta\underline{X} \qquad\qquad . [19]$$

Die Ausführung der genannten Schritte und die Addition der Berechnungen der Veränderungen der DH-Parameter werden solange wiederholt, bis die Abweichungen aller DH-Parameter die gewünschte Genauigkeit zur Berechnung von Positionen des TCP's ermöglichen. Die so iterativ ermittelten DH-Parameter werden dem kinematischen Modell des Roboterarmes zugrundegelegt.

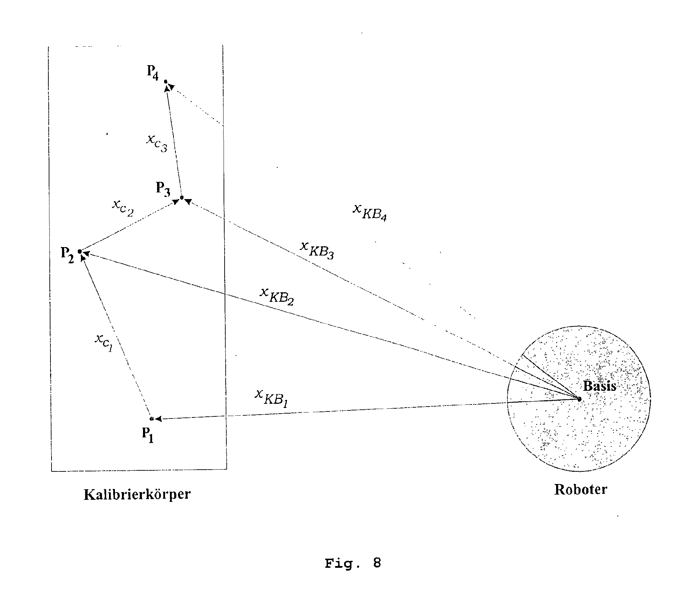

Bei den bisher beschriebenen Kalibrierverfahren war die Position des Kalibrierkörpers und die vorgegebenen Positionen für den TCP im Arbeitsraum des Roboterarmes bekannt. Das Kalibrierverfahren wird verbessert, wenn der Kalibrierkörper im Arbeitsraum flexibel positionierbar ist. Bezugnehmend auf Fig. 8, die Beziehungen zwischen unterschiedlichen Positionen des Kalibrierkörpers und der Basis des Roboterarmes schematisch darstellt, wird das dahingehend erweiterte Kalibrierverfahren erläutert.

Der Ursprung des Systems aus Kalibrierkörper und Roboterarm wird zunächst in eine durch den Kalibrierkörper vorgegebene TCP-Position gelegt, z.B. in den Punkt P$_1$ in Fig. B. Eine Transformation mittels der Transformationsmatrix $\underline{T}^n_0$ ergibt die Position der Basis des Roboterarmes bezüglich dieses Ursprungs, den Punkt P$_1$ an.

Sind die Transformationen zwischen unterschiedlichen vorgegebenen Positionen für den TCP am Kalibrierkörper bekannt, berechnet sich die Differenz zwischen der Position der Basis des Roboterarmes bezüglich der unterschiedlichen Positionen für den TCP am Kalibrierkörper wie folgt:

$$\Delta\underline{x}Basis_{l,k} = \left( \underline{x}_{KBl,k} - \underline{x}c_l \right)^{-1} - \left( \underline{x}_{KB_{1,0}} \right)^{-1} , l = 1, ..., 4 \qquad . \qquad [20]$$

Hierbei bezeichnet $\underline{X}_{KBi}$ die über die Vorwärtskinematik berechnete Transformation vom Inertialsystem des Roboterarmes in den Ursprung des Kalibrierkörpers. Die Unterschiede zwischen den Positionen P$_1$, P$_2$, P$_3$ und P$_4$ (siehe Fig. 7) für den TCP werden von $\underline{x}_{cl}$ wiedergegeben. Der Ergebnisvektor D$\underline{x}_{Basis\,l,k}$ ist ein Vektor der den relativen Positionsfehler der Basis des Roboterarmes bezüglich des Ursprungs des Kalibrierkörpers wiedergibt.

Mit einer erweiterten Identifikationsmatrix $\underline{G}_E$ und einem erweiterten Parametervektor D$\underline{\zeta}$ wird die Position der Basis des Roboterarmes bezüglich des Ursprunges des Kalibrierkörpers geschätzt. Der Vektor D$\underline{p}$ gibt Veränderungen der DH-Parameter und Veränderungen der Transformationsparameter vom Ursprung des Kalibrierkörpers in die Basis des Roboterarmes, i.e. (D$_{\underline{p}}$ =

Dj, Dw, D$\xi$, D$\eta$)$^T$ wieder. Damit ergibt sich folgende Transformation:

$$\underline{x}_{KB} = Trans_x\left(j_{l,k}\right) \cdot Trans_x\left(w_{l,k}\right) \cdot Rot_x\left(\xi_{l,k}\right) \cdot Rot_y\left(\eta_{l,k}\right) \quad .[21]$$

Darauf basierend kann die Differenz der Position des Roboterarmes bezüglich der Basis der Veränderungen der DH-Parameter berechnet werden:

$$\begin{pmatrix} \Delta \underline{x}_{Basis} \\ \vdots \\ \Delta \underline{x}_{Basis} \end{pmatrix}_{l=1,k=0}^{l=4,k=m} = \begin{pmatrix} \underline{G}_E \\ \vdots \\ \underline{G}_E \end{pmatrix}_{l=l,k=0}^{l=l,k=0} \cdot \Delta \underline{\zeta} + \begin{pmatrix} \Delta \underline{e}_f \\ \vdots \\ \Delta \underline{e}_f \end{pmatrix}_{l=1,k=1}^{l=1,k=m} \quad .[22]$$

*mit*

$$\underline{G}_{E_{l,k}} = \left( \frac{\partial \tilde{\underline{x}}_k}{\partial \underline{d}(1\dots7)} \frac{\partial \tilde{\underline{x}}_k}{\partial \underline{\theta}(1\dots7)} \frac{\partial \tilde{\underline{x}}_k}{\partial \underline{a}(1\dots7)} \frac{\partial \tilde{\underline{x}}_k}{\partial \underline{\alpha}(1\dots7)} \left| \frac{\partial \tilde{\underline{x}}_{KB_l}}{\partial \underline{\rho}_l} \right. \right)$$

Für den Vektor D$\zeta$, der Veränderungen der DH-Parameter und Kalibrierkörpers in die Basis des Roboterarmes für eine vorgegebene Position für den TCP und entsprechende Gelenkkonfigurationen bei einer Nullraumbewegung angibt, gilt dann:

$$\Delta_\zeta = G_E^+ \Delta \underline{x}_{Basis} \quad .[23]$$

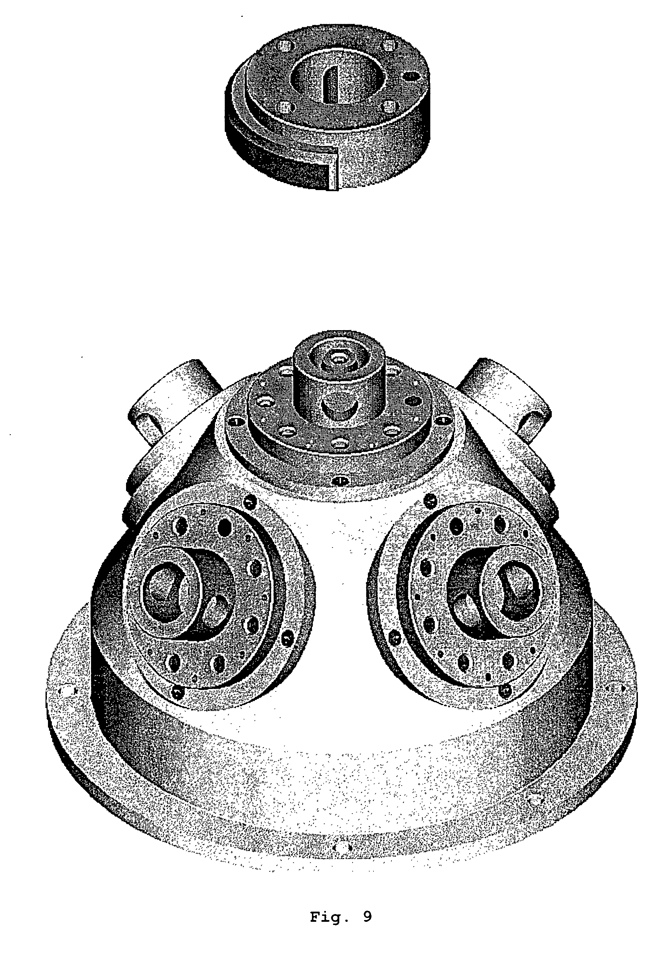

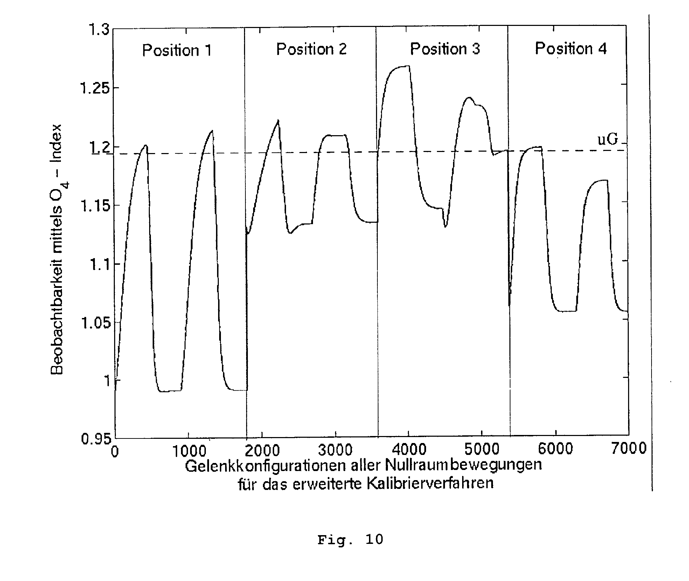

Zur Durchführung des Kalibrierverfahrens mit flexibler Positionierbarkeit des Kalibrierkörpers werden vier auf dem Kalibrierkörper vorgegebene Positionen für den TCP verwendet. Ein solcher Kalibrierkörper ist in Fig. 9 schematisch dargestellt. Aufgrund der vorgegebenen Positionen für den TCP kann die Anzahl geeigneter Gelenkkonfigurationen so hoch werden, dass der Kalibriervorgang zeitaufwendige Berechnungen erfordert. In diesem Fall ist es möglich, für den Beobachtungsindex 0, eine Untergrenze zu definieren und nur Gelenkkonfigurationen zu berücksichtigen, deren Beobachtungsindex $O_4$ oberhalb dieser Untergrenze liegt. Dies ist für einen Kalibriervorgang beispielhaft in Fig. 10 dargestellt. In diesem Fall wurde die Anzahl von mehr als 7000 gewählter Gelenkkkonfigurationen auf etwa 600 bis 800 zu berücksichtigende Gelenkkonfigurationen reduziert. Die beschriebenen Kalibrierverfahren wurden am Beispiel eines redundanten Roboterarmes erläutert, können aber auch bei nicht redundanten Roboterarmen eingesetzt werden. Hierfür wird ein nicht redundanten Roboterarm durch Hinzufügen passiver oder aktiver Gelenke zu einem redundanten Roboterarm erweitert.

**Patentansprüche**

1. Verfahren zum Kalibrieren eines Roboterarmes, mit folgenden Schritten:

   - Definieren von Parametern ($\varphi$), die die Lage und Orientierung von Gelenken (i) eines Roboterarmes angeben,
   - Positionieren des Tool-Center-Points (TCP) des Rotorarmes an einer ersten Referenzposition ($\underline{x}_{rk}$),
   - Durchführen einer ersten Nullraumbewegung mit dem Roboterarm,
   - Ermitteln von ersten Gelenkwinkeln ($q_k$) für die Gelenke (i) des Roboterarmes bei der ersten Nullraumbewegung,
   - Schätzen erster aktueller Werte ($\varphi_k$) für die Parameter ($\varphi$) in Abhängigkeit der ersten Gelenkwinkel ($q_k$).

**2.** Verfahren gemäß Anspruch 1, bei dem
für die ersten aktuellen Parameterwerte ($\underline{\varphi}_k$) ein erster Konditionsindex ($K_i$) berechnet wird, der die Schätzbarkeit der ersten aktuellen Parameterwerte ($\underline{\varphi}_k$) angibt.

**3.** Verfahren gemäß Anspruch 2, mit folgenden Schritten:

- Durchführen einer zweiten Nullraumbewegung mit dem Roboterarm,
- Ermitteln von zweiten Gelenkwinkeln ($\underline{q}_k$) für die Gelenke (i) des Roboterarmes bei der zweiten Nullraumbewegung, und
- Schätzen zweiter aktueller Parameterwerte ($\underline{\varphi}_k$) in Abhängigkeit der zweiten Gelenkwinkel ($\underline{q}_k$),
- wenn der erster Konditionsindex ($K_i$) angibt, dass die Schätzbarkeit der ersten aktuellen Parameterwerte ($\underline{\varphi}_k$) zu einer Kalibiergenauigkeit unter einer vorgegebenen Genauigkeit führt.

**4.** Verfahren gemäß Anspruch 3, bei dem
vor der Durchführung der zweiten Nullraumbewegung der Tool-Center-Point (TCP) an einer zweiten Referenzposition ($\underline{x}_{rk}$) positioniert wird.

**5.** Verfahren gemäß Anspruch 3 oder 4, bei dem
für die zweiten aktuellen Parameterwerte ($\underline{\varphi}_k$) ein zweiter Konditionsindex ($K_i$) berechnet wird, der die Schätzbarkeit der zweiten aktuellen Parameterwerte ($\underline{\varphi}_k$) angibt.

**6.** Verfahren gemäß Anspruch 5, bei dem
die aktuellen Parameterwerte ($\underline{\varphi}_k$) zur Kalibrierung gewählt werden, für die der entsprechende Konditionsindex ($K_i$) eine bessere Schätzbarkeit angibt.

**7.** Verfahren gemäß Anspruch 5 oder 6, bei dem
dritte aktuelle Parameterwerte ($\underline{\varphi}_k$) in Abhängigkeit der ersten und der zweiten Gelenkwinkel ($\underline{q}_k$) geschätzt und zur Kalibrierung gewählt werden, wenn der erster und der zweite Konditionsindex ($K_i$) angeben, dass die Schätzbarkeit der ersten und der zweiten aktuellen Parameterwerte ($\underline{\varphi}_k$) jeweils zu einer Kalibriergenauigkeit unter einer vorgegebenen Genauigkeit führen.

**8.** Verfahren gemäß einem der Ansprüche 1 bis 7, bei dem
die Nullraumbewegung des Roboterarmes so durchgeführt wird, dass an den Gelenken (i) wirkenden Kräfte und/oder Momente vorbestimmte Grenzwerte nicht überschreiten.

**9.** Verfahren gemäß einem der Ansprüche 1 bis 8, bei dem
die Nullraumbewegung von einem Benutzer manuell durchgeführt wird.

**10.** Verfahren gemäß Anspruch 9, bei dem
bei der Durchführung der Nullraumbewegung

- Momente erfasst werden, die aufgrund der Masse des Roboterarmes und/oder der Nullraumbewegung an den Gelenken (i) wirken, und
- Momente an den Gelenken (i) erzeugt werden, die die erfassten Momente kompensieren.

**11.** Verfahren gemäß Anspruch 9, bei dem
bei der Durchführung der Nullraumbewegung

- aufgrund der Masse des Roboterarmes und/oder der Nullraumbewegung an den Gelenken (i) zu erwartende Momente berechnet werden, und
- Momente an den Gelenken (i) erzeugt werden, die die berechneten Momente kompensieren.

**12.** Verfahren gemäß einem der Ansprüche 1 bis 8, bei dem
die Nullraumbewegung gesteuert durchgeführt wird, wobei Kräfte und/oder Momente ermittelt werden, die an den Gelenken (i) wirken, um die Nullraumbewegung so zu steuern, dass die Kräfte und/oder Momente an den Gelenken (i) die vorbestimmten Grenzwerte nicht überschreiten.

**13.** Verfahren gemäß Anspruch 12, bei dem

zum Ermitteln der an den Gelenken (i) wirkenden Kräfte und/oder Momente Kräfte und/oder Momente erfasst werden, die an dem Tool-Center-Point (TCP) wirken.

**14.** Verfahren gemäß einem der Ansprüche 1 bis 13, bei dem

- Anfangswerte ($\varphi_0$) für die Parameter ($\varphi$) festgelegt werden, und
- die aktuellen Parameterwerte ($\varphi_k$) in Abhängigkeit der ermittelten Gelenkwinkel ($q_k$) und der Anfangswerte ($\varphi_0$) geschätzt werden.

**15.** Verfahren nach Anspruch 14, mit den Schritten:

- Berechnen einer Position ($x_k$) für den Tool-Center-Point (TCP) in Abhängigkeit der entsprechenden ermittelten Gelenkwinkel ($q_k$) und der Anfangswerte ($\varphi_0$),
- Berechnen einer Abweichung ($Dx_k$) zwischen der Referenzposition ($Dx_k$) und der berechneten TCP-Position ($x_k$),
- Schätzen der aktuellen Parameterwerte ($\varphi_k$) in Abhängigkeit der Abweichung ($Dx_k$).

**16.** Verfahren nach Anspruch 15, mit den Schritten:

- Berechnen von Änderungswerten ($D\varphi_k$) für die Parameter ($\varphi$) in Abhängigkeit der Abweichung ($Dx_k$), und
- Schätzen der aktuellen Werte ($\varphi_k$) für die Parameter ($\varphi$) in Abhängigkeit der Änderungswerte ($D\varphi_k$).

**17.** Verfahren gemäß Ansprüche 1 bis 16, bei dem

- weitere Gelenkwinkel ($q_k$) bei der Nullraumbewegung ermittelt werden,
- TCP-Positionen ($x_k$) für die weiteren Gelenkwinkel ($q_k$) berechnet werden, und
- für die TCP-Positionen ($x_k$) die Abweichungen ($Dx_k$) von der Referenzposition ($x_{rk}$) berechnet werden.

**18.** Verfahren gemäß Anspruch 17, bei dem

- für jede der Abweichungen ($Dx_k$,) ein Änderungswert ($D\varphi_k$) berechnet wird, und
- in Abhängigkeit von einem ersten ($D\varphi_1$) der Änderungswerte ($D\varphi_k$) anfängliche aktuelle Parameterwerte ($\varphi_1$) geschätzt und nachfolgende aktuelle Parameterwerte ($\varphi_2, ..., \varphi_k$) in Abhängigkeit von jeweils einem anderen der Änderungswerte ($D\varphi_k$) durch Ändern eines vorherigen aktuellen Parameterwertes ($\varphi_1, ..., \varphi_{k-1}$) geschätzt werden.

**19.** Verfahren gemäß Anspruch 17, bei dem

- aus den Abweichungen ($Dx_k$) eine Gesamtabweichung ($X$) berechnet wird, und
- die aktuellen Parameterwerte ($\varphi_k$) in Abhängigkeit der Gesamtabweichung ($X$) geschätzt werden.

**20.** Verfahren gemäß einem der Ansprüche 1 bis 19, bei dem für eine Definition einer Referenzposition ($x_{rk}$)

- mehrere Positionen gewählt werden, und
- die Position als Referenzposition definiert wird, für die eine Schätzung der aktuellen Parameterwerte ($\varphi_k$) zu der kleinsten Abweichung von der entsprechenden Position führt.

**21.** Verfahren gemäß Anspruch 20, bei dem

- für jede der gewählten Positionen eine Größe ($O_4$) ermittelt wird, die die Beobachtbarkeit des Einflusses von Änderungen der Parameterwerte ($\varphi_k$) auf die Abweichung ($Dx_k$; $X$) angibt, und
- die Position als Referenzposition definiert wird, für die die maximale Beobachtbarkeitsgröße ($O_4$) ermittelt wurde.

**22.** Verfahren gemäß Anspruch 20, bei dem

- für jede der gewählten Positionen eine Größe ($O_4$) ermittelt wird, die die Beobachtbarkeit des Einflusses von

Änderungen der Parameterwerte ($\underline{\varphi}_k$) auf die Abweichung (D$\underline{x}_k$; $\underline{X}$) angibt, und

- die Position als Referenzposition definiert wird, für die in einem vorgegebenen Bereich um das Maximums der entsprechenden Beobachtbarkeitsgröße ($O_4$) die Anzahl von Gelenkkonfigurationen am größten ist.

23. Verfahren gemäß einem der Ansprüche 1 bis 22, bei dem
die räumliche Lage und Orientierung der Referenzposition ($\underline{x}_{rk}$) relativ zu dem Roboterarm vorgegeben werden.

24. Verfahren gemäß einem der Ansprüche 1 bis 22, bei dem

- mehrere Referenzpositionen ($\underline{x}_{r1}$ ..., $\underline{x}_{rk}$) definiert werden, deren räumliche Lage und Orientierung relativ zueinander bekannt sind,
- die räumliche Lage und Orientierung der Referenzpositionen ($\underline{x}_{r1}$..., $\underline{x}_{rk}$) relativ zu dem Roboterarm in Abhängigkeit der entsprechenden ermittelten Gelenkwinkel ($\underline{\varphi}_k$) berechnet werden, und
- das Schätzen der aktuellen Parameterwerte ($\underline{\varphi}_k$) bezüglich der Referenzpositionen ($\underline{x}_{r1}$..., $\underline{x}_{rk}$) durchgeführt wird.

25. Verfahren gemäß einem der Ansprüche 1 bis 24, bei dem
zur Durchführung der Nullraumbewegung ein passives Gelenk zwischen dem Tool-Center-Point (TCP) und der Referenzposition ($\underline{x}_{rk}$) angebracht wird.

26. Verfahren gemäß einem der Ansprüche 1 bis 25, bei dem
die Lage und Orientierung des Tool-Center-Points (TCP) zu der Referenzposition ($\underline{x}_{rk}$) bei der Durchführung der Nullraumbewegung beibehalten wird.

Fig. 1

Fig. 2

Fig. 3

Gegenstück
an ausgemessener Position

Endeffektor
fest eingespannt

Drehung
in Gelenk 1
und Gelenk 7

Konfiguration des
DLR - Leichtbauroboters

Fig. 4

Fig. 5a

Fig. 5b

Fig. 5c

Fig. 6

Fig. 7

Fig. 8

Fig. 9

Fig. 10